# EUROPÄISCHE PATENTSCHRIFT

(11) **EP 3 249 104 B1**
(45) Veröffentlichungstag und Bekanntmachung des Hinweises auf die Patenterteilung: **18.07.2018**
(21) Anmeldenummer: 16171715.2
(22) Anmeldetag: 27.05.2016
(51) Int. Cl.: E02B 7/22, E02B 7/54, E02B 3/10, E04H 9/14, E04H 17/20

(54) **STÜTZE EINER WASSERSCHUTZWAND MIT EINER DICHTUNG**
SUPPORT OF A WATER PROTECTION WALL WITH A SEAL
SUPPORT D'UNE PAROI DE PROTECTION CONTRE L'EAU AVEC UN JOINT

(43) Veröffentlichungstag der Anmeldung: 29.11.2017
(73) Patentinhaber: Steinhardt, Jörg-Michael, 65232 Taunusstein (DE)
(72) Erfinder: Steinhardt, Jörg-Michael, 65232 Taunusstein (DE)
(74) Vertreter: Quermann, Helmut

(56) Entgegenhaltungen:
- DE-A1-102014 101 780
- JP-A- 2001 164 542
- JP-U- S5 228 337
- US-A1- 2004 200 169

## Beschreibung

Die Erfindung betrifft eine Stütze einer Wasserschutzwand mit einem Dichtungselement, wobei die Stütze der Aufnahme mehrerer übereinander gestapelter Dammbalken endseitig in einem U-förmigen Profilabschnitt der Stütze dient, und die Stütze im Bereich eines Schenkels des Profilabschnitts eine Aufnahme für das elastische Dichtelement aufweist, zwecks Abdichtung von Stütz- und Dammbalken auf einer Trockenseite der Wasserschutzwand, wobei die Aufnahme einen U-förmigen Querschnitt mit zwei Schenkeln und einem diesen verbindenden Steg aufweist, sowie die beiden Schenkel und das Dichtungselement Formschlussbereiche aufweisen, mittels derer das Dichtungselemente in Tiefenerstreckung der Aufnahme zu dieser festgelegt ist.

Wasserschutzwände, insbesondere mobile demontierbare Hochwasserschutzwände sind aus dem Stand der Technik in vielfältiger Weise bekannt. Bei Hochwasserschutzwänden werden in aller Regel übereinander stapelbare Dammbalken verwendet, die abdichtend ineinander eingreifen und mit ihren Enden jeweils in Stützen im Bereich dort ausgebildeter U-förmiger Profile eingelegt sind. Die Dammbalken bestehen dabei vorzugsweise aus stranggepresstem Aluminium oder einer Aluminiumlegierung und sind als Hohlprofile ausgebildet. Auch die Stützen sind vorzugsweise stranggepresste Bauteile und bestehen insbesondere aus Aluminium oder einer Aluminiumlegierung. Die Stützen werden, vertikal angeordnet, im Boden auf unterschiedlichste Art und Weise verankert. Unter Einwirkung des sich aufgrund des Flüssigkeitsstandes des Hochwassers ergebenden Drucks auf die Dammbalken, beaufschlagen die Dammbalken die in den Stützen gelagerten elastischen Dichtungselemente, sodass eine Abdichtung von Stützen und Dammbalken auf der Trockenseite der Hochwasserschutzwand erfolgt.

Eine Stütze mit einem Dichtungselement der eingangs genannten Art ist aus der DE 299 16 656 U1 bekannt. Das jeweilige Dichtungselement steht über die Aufnahme der Stütze vor und ist so zwischen der Stütze und den übereinander gestapelten Dammbalken wirksam. Das jeweilige Dichtungselement ist in der Aufnahme gehalten, wobei aufeinander zu gerichtete Vorsprünge der gleich lang ausgebildeten Schenkel in der Aufnahme Hinterschnitte des Dichtungselements hintergreifen. Bei einem Einstau von Hochwasser wird die Dichtung zwischen der Stütze und den übereinander gestapelten Dammbalken gequetscht. Hierbei ist die Gefahr der Beschädigung des Dichtungselements erheblich, weil der jeweilige Dammbalken zwischen den diesen aufnehmenden Stützen in Längsrichtung des Dammbalkens verschieblich ist und hierbei Scherkräfte auf die zugeordneten Dichtungen ausübt. Infolge dieser Gestaltung des Dichtungselements, das ausschließlich flächig an den übereinander gestapelten Dammbalken anliegt, ist keine zufriedenstellende Dichtigkeit der Hochwasserschutzwand auf deren Trockenseite zu verzeichnen.

Eine Stütze für eine Hochwasserschutzwand ist ferner aus der EP 2 060 680 A1 bekannt. Auch bei dieser finden Stützen Verwendung, die zumindest auf der Trockenseite der Hochwasserschutzwand Dichtungsnuten aufweisen. Diese sind dazu vorgesehen, ein gummielastisches Dichtungselement in sich aufzunehmen, um eine wasserdichte Abdichtung zwischen Stütze und Dammbalken zu realisieren.

Wasserschutzwände werden auch in Kanälen bei dort entstehendem Hochwasser bzw. Einstau eingesetzt.

Weiterhin ist aus der US 2004/200169 A1 eine Türstruktur zur Verhinderung von Wassereintritt bekannt. Diese Türstruktur weist eine Stütze mit einem Dichtungselement auf, die die Merkmale des Oberbegriffs des Patentanspruchs 1 aufweist.

Die Stütze dient der Aufnahme mehrerer übereinander gestapelter Dammbalken einer Wasserschutzwand endseitig in einem U-förmigen Profilabschnitt der Stütze. Die Stütze weist im Bereich eines Schenkels des Profilabschnitts eine Aufnahme für das elastisches Dichtungselement auf, zwecks Abdichtung von Stütze und Dammbalken auf einer Trockenseite der Wasserschutzwand.

Aufgabe der vorliegenden Erfindung ist es, eine Stütze mit einem Dichtungselement, die die Merkmale des Oberbegriffs des Patentanspruchs aufweist, so weiterzubilden, dass eine besonders hohe Dichtigkeit zwischen Trockenseite und Wasserseite der Wasserschutzwand im Bereich des jeweiligen Dichtungselements gewährleistet ist.

Gelöst wird die Aufgabe durch eine Stütze mit einem Dichtungselement, die gemäß den Merkmalen des Patentanspruchs 1 ausgebildet ist.

Bei der erfindungsgemäßen Stütze ist der eine Schenkel der Aufnahme, nachfolgend als erster Schenkel bezeichnet, mit seinem dem Dammbalken zugewandten Ende gegenüber dem anderen Schenkel der Aufnahme, der nachfolgend als zweiter Schenkel bezeichnet ist, bezüglich dessen dem Dammbalken zugewandten Endes vorstehend ausgebildet. Das Dichtungselement ist mit einer Stufe versehen, zum Abstützen des Dichtungselements am zweiten Schenkel. Ferner weist das Dichtungselement einen Dichtungselementabschnitt, nachfolgend als erstes Dichtungselement bezeichnet, auf, der von der Aufnahme aufgenommen wird. Ferner weist das Dichtungselement einen weiteren Dichtungselementabschnitt, nachfolgend als zweiter Dichtungselementabschnitt bezeichnet, auf, der außerhalb der Aufnahme angeordnet ist und mit dem ersten Dichtungselementabschnitt verbunden ist. Ferner weist der zweite Dichtungselementabschnitt eine Dichtlippe zur Anlage an den Dammbalken auf.

Bei einem Hochwasserereignis wirkt der Staudruck des Hochwassers bzw. Einstaus auf die Dammbalken, insbesondere mit dem höchsten Druck auf den obersten Dammbalken, und drückt diese im Bereich des jeweiligen Endes des Dammbalkens gegen das zugeordnete elastische Dichtungselement. Dieses wird hierdurch verformt. Hierbei verhindert der zweite Schenkel der Aufnahme, der mit der Stufe des Dichtungselements zusammenwirkt, dass der zweite Dichtungselementabschnitt des Dichtungselements bei der Verformung des Dichtungselements wesentlich mit verformt wird, womit die Dichtlippe nach wie vor an dem Dammbalken anliegt und deren Dichtfunktion gewährleistet ist.

Es wird als besonders vorteilhaft angesehen, wenn das Dichtungselement, zwischen dem ersten und dem zweiten Dichtungselementabschnitt angeordnet, einen dritten Dichtungselementabschnitt aufweist, zur Anlage der Dammbalken am dritten Dichtungselementabschnitt. Somit liegt der jeweilige Dammbalken am zweiten und dritten Dichtungselementabschnitt an. Die Verformung des dritten Dichtungselementabschnitts bei Anlage des Dammbalkens an diesem führt zu einer Bewegung des dritten Dichtungselementabschnitts in Richtung der Aufnahme, mit der Konsequenz, dass der zweite Dichtungselementabschnitt stärker gegen die Dammbalken gedrückt wird. Insbesondere die Dichtlippe des zweiten Dichtungselementabschnitts wird mit größerer Vorspannung gegen die Dammbalken gedrückt. Demnach ergibt sich durch die beschriebene Gestaltung des Dichtungselements eine besonders gute Abdichtung zwischen Trockenseite und Wasserseite der Wasserschutzwand, insbesondere Hochwasserschutzwand bzw. Wasserschutzwand im Kanal.

Bevorzugt weist der dritte Dichtungselementabschnitt einen sich über die Länge des Dichtungselements erstreckenden Hohlraum auf. Aufgrund dieses Hohlraums ist das Dichtungselement im Bereich des dritten Dichtungselementabschnitts nachgiebiger, womit sich das Dichtungselement in diesem Bereich unter Einwirkung der Dammbalken definiert verformen kann. Insbesondere ist der Hohlraum außerhalb der Aufnahme angeordnet. Dies ist unter dem Aspekt der definierten Verformbarkeit des Dichtungselements von besonderem Vorteil.

Gemäß einer bevorzugten Weiterbildung der Erfindung ist vorgesehen, dass der dritte Dichtungselementabschnitt eine Verlängerung des ersten Dichtungselementabschnitts in Tiefenerstreckung der Aufnahme bildet. Kräfte, die über die Dammbalken in das Dichtungselement im Bereich des dritten Dichtungselementabschnitts eingeleitet werden, werden somit unmittelbar vom dritten Dichtungselementabschnitt in den ersten Dichtungselementabschnitt weitergeleitet. Hierdurch lässt sich die Scherwirkung, die über die Dammbalken auf das Dichtungselement übertragen wird, wesentlich reduzieren. Im Übrigen werden solche Scherkräfte, auch aufgrund des Zusammenwirkens des Dichtungselements im Bereich der Stufe mit dem zweiten Schenkel der Aufnahme, vorteilhaft aufgefangen.

Als besonders zweckmäßig wird es angesehen, wenn, bei unbelastetem Dichtungselement, der Hohlraum in Richtung der Dammbalken über den ersten Schenkel vorstehend angeordnet ist. Da der Hohlraum in einem Bereich des Dichtungselements angeordnet ist, der nicht von der Aufnahme der Stütze umfasst ist, ist eine besonders gute Nachgiebigkeit des Dichtungselements in diesem Bereich des Dichtungselements, der einen Kontaktbereich zu den Dammbalken bildet, gewährleistet. Insbesondere schließt das der Stufe zugewandte Ende des Hohlraums mit dem freien Ende des ersten Schenkels ab.

Der Hohlraum ist vorzugsweise so ausgebildet, dass er, bei unbelastetem Dichtungselement, einen Querschnitt aufweist, der sich aus einem rechteckigen Querschnittsabschnitt und/oder mindestens einem gewölbten, insbesondere halbkreisförmigen Querschnittsabschnitt zusammensetzt. Durch diese Gestaltung lässt sich eine vorteilhafte Wandstärke des Dichtungselements im dritten Dichtungselementabschnitt bewerkstelligen, insbesondere bei Ausbildung des dritten Dichtungselementabschnitts dahingehend, dass dessen dem Dammbalken zugewandte Kontur halbkreisförmig gestaltet ist, sollte der Hohlraum in diesem Bereich einen halbkreisförmigen Querschnitt aufweisen. Der rechteckige Querschnittsabschnitt ist vorzugsweise der Stufe zugeordnet.

Gemäß einer besonderen Ausführungsform der Erfindung ist vorgesehen, dass die Stufe und/oder die Dichtlippe auf der Wasserseite der Wasserschutzwand angeordnet sind. So tritt das Wasser nicht nur in die üblicherweise als Hohlkörper ausgebildeten Dammbalken ein, sondern auch in den Hohlraum der Stütze, der durch den U-förmigen Profilabschnitt der Stütze gebildet ist. Die Dichtlippe dichtet zu den Dammbalken hin ab und wird unter dem anstehenden Wasserdruck gegen die Dammbalken gedrückt. Hierbei wirkt der Druck auf die den Dammbalken abgewandte Seite der Dichtlippe.

Um eine optimale Positionierung des Dichtungselements innerhalb der Aufnahme zu gewährleisten, ist vorgesehen, dass der erste Dichtungselementabschnitt auf zwei abgewandten Seiten mehrere parallel zueinander angeordnete Vorsprünge aufweist. Diese Vorsprünge sind parallel zu dem Nutgrund einer durch die Aufnahme gebildeten Nut angeordnet. Die Vorsprünge liegen an den beiden Schenkeln der Aufnahme an. Entsprechend dem über die Dammbalken in das Dichtungselement eingeleiteten Druck wird das Dichtungselement im ersten Dichtungselementabschnitt komprimiert und es drückt sich dort das Dichtungselement mit deren auf den abgewandten Seiten des ersten Dichtungselementabschnitts angeordneten Vorsprüngen stärker gegen die beiden Schenkel der Aufnahme.

Bevorzugt weisen die beiden Schenkel der Aufnahme jeweils mindestens einen Vorsprung auf, wobei die Vorsprünge in Vertiefungen des Dichtungselements eingreifen. Hierdurch ist das Dichtungselement in nicht aufgebautem Zustand der Wasserschutzwand, somit wenn keine Dammbalken auf das Dichtungselement einwirken, verliersicher in der Stütze gehalten. Insbesondere erstrecken sich die Vorsprünge über die gesamte Länge der Ausnehmung und es erstrecken sich die Vertiefungen über die gesamte Länge des Dichtungselements. Diese Anordnung ermöglicht es aber auch, das Dichtungselement einfach und sicher zu montieren und zu demontieren. Zum Montieren ist es nur erforderlich, das Dichtungselement in die Aufnahme zu drücken. Eine Demontage erfolgt insbesondere dadurch, dass das Dichtungselement an einem Ende, bezogen auf dessen Längserstreckung, aus der Aufnahme herausgebogen wird, und dann zunehmend in dessen Längserstreckung aus der Aufnahme herausgebogen wird. Dies ist, wegen der Verformbarkeit des Dichtungselements, ohne weiteres möglich.

Die Dichtlippe ist insbesondere derart gestaltet, dass sie sich zu ihrem freien Ende hin konisch verjüngt. Das Dichtungselement weist somit im Bereich der Stufe eine wesentlich größere Stabilität auf als im Bereich des freien Endes der Dichtlippe. Dies ist unter dem Aspekt der Verformbarkeit des Dichtungselements im Bereich deren Dichtungslippe von besonderem Vorteil. Es wird erreicht, dass sich das Dichtungselement im Bereich des freien Endes der Dichtlippe stärker verformen kann, hingegen das Dichtungselement im Bereich der Stufe stabiler ist.

Vorzugsweise weist das Dichtungselement über dessen Länge einen konstanten Querschnitt auf. Das Dichtungselement ist insbesondere als stranggepresstes Dichtungselement ausgebildet.

Besonders zweckmäßig besteht das Dichtungselement aus einem elastischen Kunststoff. Insbesondere besteht das Dichtungselement aus Silikon.

Gemäß einem besonderen Aspekt der Erfindung ist vorgesehen, dass bei maximaler Stauhöhe der Wasserschutzwand zumindest der obere Dammbalken der Wasserschutzwand am ersten Schenkel der Aufnahme anliegt. Demzufolge ist die Verformung des Dichtungselements begrenzt. Bei einer definierten Verformung des Dichtungselements gelangt zumindest der oberste Dammbalken der Wasserschutzwand in Kontakt zum längeren ersten Schenkel der Aufnahme, sodass das Dichtungselement, das dann unter sehr hoher Vorspannung steht, nicht weiter zusammengedrückt werden kann, aber mit maximaler Dichtkraft weiterhin zu dem Dammbalken hin abdichtet. Somit ist das Dichtungselement mittels des Dammbalkens begrenzt zusammenpressbar, wobei die Begrenzung durch Anlage des Dammbalkens am Ende des langen Schenkels der Aufnahme erfolgt.

Bei der Stütze der Wasserschutzwand handelt es sich vorzugsweise um ein stranggepresstes Bauteil, insbesondere ein solches aus Aluminium oder einer Aluminiumlegierung.

Weitere Merkmale der Erfindung sind in den Unteransprüchen, der Beschreibung der nachstehenden Zeichnung und der Zeichnung selbst dargestellt, wobei bemerkt wird, dass alle Einzelmerkmale und alle Kombinationen von Einzelmerkmalen erfindungswesentlich sind.

In der Zeichnung ist die Erfindung anhand eines grundsätzlichen Ausführungsbeispiels dargestellt, ohne auf dieses beschränkt zu sein. Es zeigt:
- Fig. 1: in einer Draufsicht eine Anordnung von zwei Stützen einer Hochwasserschutzwand mit einer Vielzahl in den beiden Stützen gehaltener Dammbalken, die übereinandergestapelt angeordnet sind,
- Fig. 2: eine räumliche Ansicht der bei der Hochwasserschutzwand gemäß Fig. 1 verwendeten Stütze,
- Fig. 3: ein U-förmiger Profilabschnitt der Stütze mit in diesem gelagerten elastischen Dichtungselementen und von diesem Profilabschnitt aufgenommenen Dammbalken, in einer Draufsicht gesehen, für einen Zustand ohne Einwirkung von Hochwasser auf die Hochwasserschutzwand,
- Fig. 4: die Anordnung gemäß Fig. 3 bei Einwirkung einer Druckkraft auf die Dammbalken bei Hochwasser, mit zusätzlich veranschaulichtem Wasser.

### Figurenbeschreibung

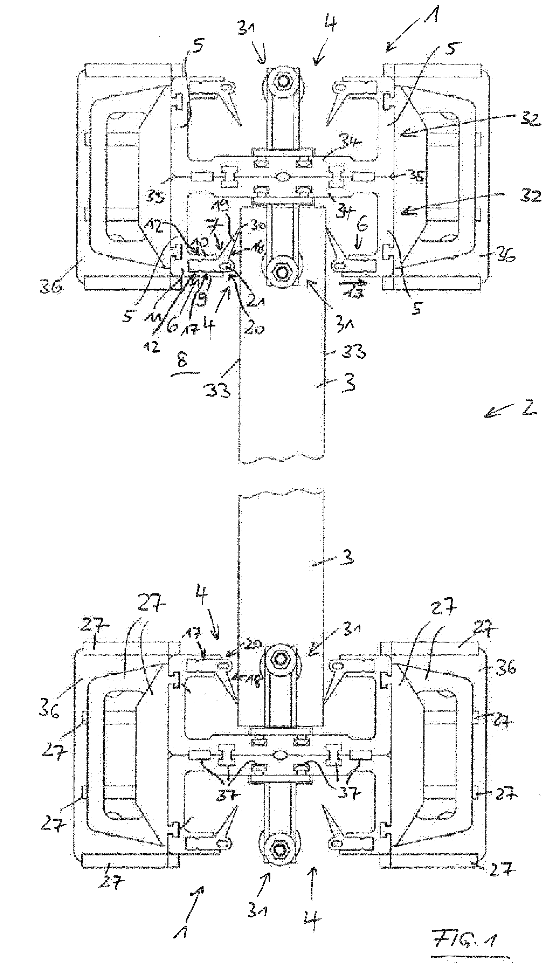

Fig. 1 zeigt eine Grundstruktur einer Wasserschutzwand, bei der es sich um eine Hochwasserschutzwand 2 handelt, mit zwei dort veranschaulichten, in Abstand zueinander angeordneten und vertikal positionierten Stützen 1. Die beiden Stützen 1 dienen auf ihren einander zugewandten Seiten der Aufnahme mehrerer übereinander gestapelt angeordneter und zueinander abgedichteter Dammbalken 3. Hierzu ist der jeweilige horizontal angeordnete Dammbalken auf seiner Unterseite mit einer sich über dessen Länge erstreckende Dichtung versehen, die zur Oberseite des darunter befindlichen Dammbalkens bzw. betreffend den untersten Dammbalken zu einem Boden abdichtet. Der jeweilige Dammbalken 3 ist als Spritzgussteil ausgebildet und besteht aus Aluminium oder einer Aluminiumlegierung. Der Dammbalken 3 ist als Hohlkörper gestaltet. In der jeweiligen Stütze 1 sind vertikal einstellbare Niederhalter 31 gelagert, die die Anordnung der übereinander gestapelten Dammbalken 3 gegen den Boden vorspannen, indem der jeweilige Niederhalter 31 auf die obere Fläche des oberen Dammbalkens 3 drückt.

Die jeweilige Stütze 1 weist zwei identisch ausgebildete Stützenteile 32 auf, die jeweils zwei parallele Schenkel 5 und einen diese beiden Schenkel 5 verbindenden Steg 34 aufweisen. Hierdurch stellt sich das jeweilige Stützenteil 32 im Profil U-förmig dar. Verbunden sind die beiden Stützenteile 32, die im Bereich deren Stege 34 aneinander liegen, mittels Schweißverbindungen 35, die auf abgewandten Seiten der Anordnung der Stützenteile 32 vorhanden sind, wobei sich die Schweißnaht über die gesamte Höhe der Stützenteile 32 und damit die gesamte Höhe der Stütze 1 erstreckt. Um die Stütze 1 zusätzlich zu verstärken, insbesondere unter dem Aspekt der Verbesserung der Biegefestigkeit, sind auf den abgewandten Seiten der Stütze 1, die die Schweißverbindungen 35 aufweisen, horizontal und vertikal angeordnete Verstärkungsteile 27 vorgesehen, die nach dem Zusammenschweißen der beiden Stützenteile 32 mit diesen verschweißt werden. Bei diesen Verstärkungsteilen 27 handelt es sich im Wesentlichen um Koppelbleche. Im Bereich des unteren Endes der Stütze 1 sind mit den vertikal verlaufenden Verstärkungsteilen 27 Bodenbleche 36 verschweißt. Die Stütze 1 besteht gleichfalls aus Aluminium oder einer Aluminiumlegierung. Die Stützenteile 32 sind durch Strangpressen hergestellt, weisen somit einen identischen Querschnitt auf. In den Stützenteilen 32 sind diverse Nuten 37 zur Aufnahme der Niederhalter 31 und von nicht näher veranschaulichten einschiebbaren Verstärkungsstäben vorgesehen. Weitere Nuten dienen dem Einschieben der horizontal angeordneten Verstärkungsteile 27 vor deren Verschweißen mit den Stützenteilen 32.

Die Stütze 1 weist somit vier identisch ausgebildete Schenkel 5 auf. Jeder Schenkel 5 weist im Bereich seines dem zugeordneten Steg 34 abgewandten Endes eine Aufnahme 6 für ein elastisches Dichtungselement 7 auf, zwecks Abdichtung von Stütze 1 und Dammbalken 3 auf einer Trockenseite 8 der Hochwasserschutzwand. Damit die Stütze 1 universell eingesetzt werden kann, somit ohne Beachtung der Trockenseite, nimmt jede der vier vorhandenen Aufnahmen 6 der jeweiligen Stütze 1 ein elastisches Dichtungselement 7 auf. Die jeweilige Aufnahme 6 weist einen U-förmigen Querschnitt mit zwei Schenkeln 9, 10 und einen diese verbindenden Steg 11 auf, der einen Endabschnitt des größeren Schenkels 5 darstellt. Beide Schenkel 9, 10 und das Dichtungselement 7 weisen Formschlussbereiche 12 auf, mittels derer das Dichtungselement 7 in Tiefenerstreckung 13 der Aufnahme 6 zu dieser festgelegt ist.

Der eine Schenkel 9 der Aufnahme 6 ist mit seinem dem Dammbalken 3 zugewandten Ende 14 gegenüber dem anderen Schenkel 10 der Aufnahme 6 bezüglich dessen dem Dammbalken 3 zugewandten Endes 15 vorstehend ausgebildet. Ferner ist das Dichtungselement 7 mit einer Stufe 16 versehen, zum Abstützen des Dichtungselements 7 am zweiten Schenkel 10. Das Dichtungselement 7 weist einen Dichtungselementabschnitt 17 auf, der von der Aufnahme 6 aufgenommen wird, ferner einen Dichtungselementabschnitt 18, der außerhalb der Aufnahme 6 angeordnet ist und mit dem Dichtungselementabschnitt 17 verbunden ist. Ferner weist der Dichtungselementabschnitt 18 eine Dichtlippe 19 zur Anlage an dem Dammbalken 3 auf.

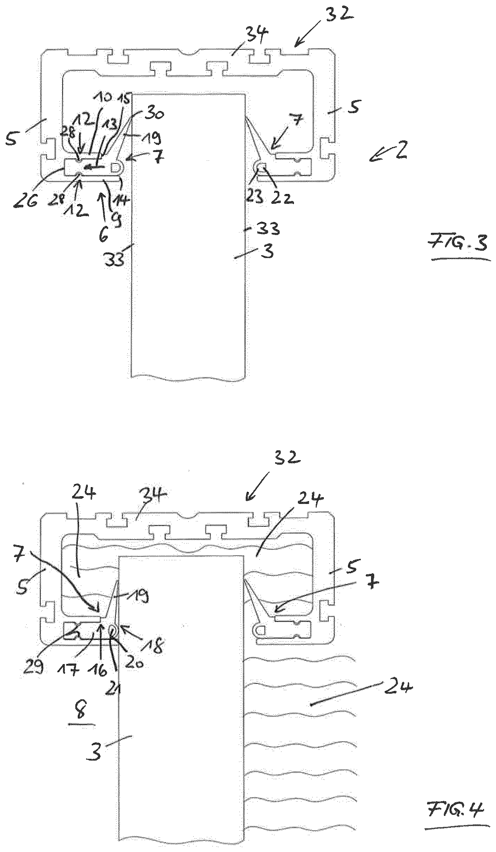

Das Dichtungselement 7 weist zwischen dem ersten Dichtungselementabschnitt 17 und dem zweiten Dichtungselementabschnitt 18 einen Dichtungselementabschnitt 20 auf, zur weiteren Anlage des Dammbalkens 3 am Dichtungselement 7. Der Dichtungselementabschnitt 20 weist einen sich über die Länge des Dichtungselements 7 erstreckenden Hohlraum 21 auf. Dieser ist bei der Ausführungsform gemäß der Fig. 1 außerhalb der Aufnahme 6 angeordnet, hingegen bei der geringfügig abgewandelten Variante gemäß der Fig. 3 und 4 nur teilweise außerhalb der Aufnahme 6 positioniert, jeweils bezogen auf das unbelastete Dichtungselement 7, somit für den Zustand, bei dem kein Hochwasser auf die Dammbalken einwirkt.

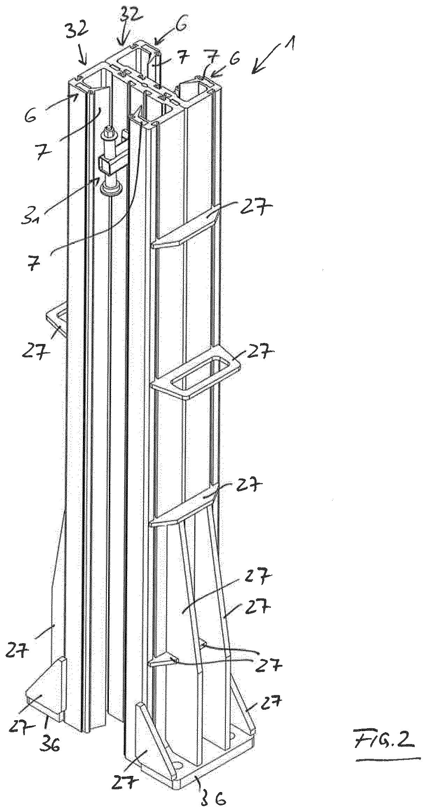

Der Dichtungselementabschnitt 20 bildet eine Verlängerung des Dichtungselementabschnitts 17 in Tiefenerstreckung 13 der Aufnahme 6. Der Hohlraum 21 weist einen Querschnitt auf, der in dem Ausführungsbeispiel gemäß der Fig. 1 und 2 oval ist, hingegen sich bei der Modifizierung gemäß der Fig. 3 und 4 aus einem rechteckigen Querschnittsabschnitt 22 und einem halbkreisförmigen Querschnittsabschnitt 23 zusammensetzt.

Der Dichtungselementabschnitt 17 ist auf zwei abgewandten Seiten mit mehreren parallel zueinander angeordneten Vorsprüngen versehen, die parallel zu dem Nutgrund 26 einer durch die Aufnahme gebildeten Nut angeordnet sind. Diese Vorsprünge sind nicht veranschaulicht. Im Bereich der Vorsprünge liegt das Dichtungselement an den Schenkeln 9 und 10 an, womit das Dichtungselement in der Aufnahme 6 spielfrei gehalten ist. Die Vorsprünge erstrecken sich über die gesamte Länge des Dichtungselements 7. Ferner weisen die beiden Schenkel 9, 10 der Aufnahme 6 jeweils einen Vorsprung 28 auf. Die Vorsprünge 28 greifen in Vertiefungen 29 des Dichtungselements 7 ein. Die Vorsprünge 28 erstrecken sich über die gesamte Länge der Ausnehmungen 6 und es erstrecken sich die Vertiefungen 29 über die gesamte Länge des Dichtungselements 7.

Die Dichtlippe 19 verjüngt sich zu deren freien Ende 30 konisch.

Das Dichtungselement 7 besteht aus einem elastischen Kunststoff, insbesondere aus Silikon. Es weist über dessen Länge einen konstanten Querschnitt auf. Das Dichtungselement ist insbesondere als stranggepresstes Bauelement ausgebildet.

Die Fig. 1, 3 und 4 veranschaulichen das Zusammenwirken des jeweiligen Dammbalkens 3 mit dem diesem zugeordneten Stützenteil 32. Der Dammbalken 3 ist mit seinem freien Ende in den U-förmigen Profilabschnitt 4 des Stützenteils 32 eingesetzt und es wird der oberste Dammbalken 3 mittels des Niederhalters 31 niedergehalten. Bei dieser vertikalen Anordnung der Stütze 1 mit vertikal übereinandergestapelten Dammbalken 3 sind die Dammbalken 3 dann, wenn kein Hochwasser vorhanden ist, symmetrisch bezüglich der vertikalen Symmetrieebene des jeweiligen Stützenteils 32 angeordnet. In dieser Stellung liegen die Dichtungselemente 7 ausschließlich im Bereich der Enden 30 der Dichtlippen 19 an der vertikalen, sich in Längsrichtung des jeweiligen Dammbalkens 3 erstreckenden Oberfläche 39 des Dammbalkens 3 an. Der Dammbalken 3 liegt somit nicht am Dichtungselementabschnitt 20 an.

Unter dem Aspekt der Darstellung der Fig. 3 und 4 wird davon ausgegangen, dass sich rechts der Hochwasserschutzwand 2 Hochwasser einstaut, wobei das Wasser mit Schlangenlinien in Fig. 4 veranschaulicht ist. Die Hochwasserseite ist mit der Bezugsziffer 24 veranschaulicht. Infolge des durch das Hochwasser auf die Dammbalken 3 ausgeübten Drucks werden die Dammbalken 3 nach links gegen das sich links befindliche Dichtungselement 7 geschoben. Wasser gelangt durch die als Hohlkörper ausgebildeten Dammbalken 3 und an dem rechten Dichtungselement 7, konkret dessen Dichtlippe 19 vorbei in den Innenraum des U-förmigen Profilabschnitts 4. Hierbei ist die Stufe 16 und die Dichtlippe 19 des linken Dichtungselements auf der Wasserseite 24 der Hochwasserschutzwand 2 angeordnet. Aufgrund des höheren Drucks auf der Wasserseite 24 wird die Dichtlippe 19 des linken Dichtungselements 7 stärker gegen den Dammbalken 3 und damit gegen dessen Oberfläche 33 gedrückt. Gleichzeitig wird aufgrund Einwirkung des Dammbalkens 3 das Dichtungselement 7 komprimiert. Hierbei wird einerseits der Hohlraum 21 verformt und stellt sich somit als flacheres Gebilde dar und es werden überdies die Dichtungselementabschnitte 17 und 20 komprimiert. Die Stufe 16 des Dichtungselements 7, die am Schenkel 10 anliegt, stützt die Dichtlippe 9 und verhindert so eine Verformung des Dichtungselements 7 mit dessen Dichtungselementabschnitt 20 in Richtung des Steges 34 des Profilabschnitts 4. Bei maximalem Staudruck im Bereich der Wasserseite 34 wird die Verlagerung des jeweiligen Dammbalkens 3 begrenzt, indem der Dammbalken 3 das Dichtungselement 7 nur solange zunehmend komprimieren kann, bis der Dammbalken 3 am Ende 14 des Schenkels 9 anliegt, der damit einen Anschlag für den Dammbalken 3 bildet.

Lässt der Einstau von Hochwasser nach und verringert sich demnach die mittels der Dammbalken 3 auf die Dichtungselemente 7 der beiden zugeordneten Stützen 1 ausgeübte Kraft, drücken die Dichtungselemente 7 den Dammbalken 3 langsam wieder in die Ausgangsstellung gemäß Fig. 3 zurück. Aufgrund des Zusammenwirkens der Vorsprünge 28 und der Vertiefungen sind die Dichtungselemente 7 verliersicher in den Stützenteilen 32 gehalten.

### Bezugszeichenliste

- 1: Stütze
- 2: Wasserschutzwand / Hochwasserschutzwand
- 3: Dammbalken
- 4: Profilabschnitt
- 5: Schenkel
- 6: Aufnahme
- 7: Dichtungselement
- 8: Trockenseite
- 9: Schenkel
- 10: Schenkel
- 11: Steg
- 12: Formschlussbereich
- 13: Tiefenerstreckung
- 14: Ende
- 15: Ende
- 16: Stufe
- 17: Erster Dichtungselementabschnitt
- 18: Zweiter Dichtungselementabschnitt
- 19: Dichtlippe
- 20: Dritter Dichtungselementabschnitt
- 21: Hohlraum
- 22: Querschnittsabschnitt
- 23: Querschnittsabschnitt
- 24: Wasserseite
- 26: Nutgrund
- 27: Verstärkungsteil
- 28: Vorsprung
- 29: Vertiefung
- 30: Ende
- 31: Niederhalter
- 32: Stützenteil
- 33: Oberfläche
- 34: Steg
- 35: Schweißverbindung
- 36: Bodenfläche
- 37: Nut

## Patentansprüche

1. Stütze (1) einer Wasserschutzwand (2) mit einem Dichtungselement (7), wobei die Stütze (1) der Aufnahme mehrerer übereinander gestapelter Dammbalken (3) endseitig in einem U-förmigen Profilabschnitt (4) der Stütze (1) dient, und die Stütze (1) im Bereich eines Schenkels (5) des Profilabschnitts (4) eine Aufnahme (6) für das elastische Dichtungselement (7) aufweist, zwecks Abdichtung von Stütze (1) und Dammbalken (3) auf einer Trockenseite (8) der Wasserschutzwand (2), wobei die Aufnahme (6) einen U-förmigen Querschnitt mit einem ersten Schenkel (9), einem anderen zweiten Schenkel (10) und einen diese verbindenden Steg (11) aufweist, sowie die beiden Schenkel (9, 10) und das Dichtungselement (7) Formschlussbereiche (12) aufweisen, mittels derer das Dichtungselement (7) in Tiefenerstreckung (13) der Aufnahme (6) zu dieser festgelegt ist, wobei das Dichtungselement (7) mit einer Stufe (16) versehen ist, zum Abstützen des Dichtungselements (7) am zweiten Schenkel (10), sowie das Dichtungselement (7) einen ersten Dichtungselementabschnitt (17) aufweist, der von der Aufnahme (6) aufgenommen wird, sowie einen zweiten Dichtungselementabschnitt (18) aufweist, der außerhalb der Aufnahme (6) angeordnet ist und mit dem ersten Dichtungselementabschnitt (17) verbunden ist, wobei der zweite Dichtungselementabschnitt (18) eine Dichtlippe (19) zur Anlage an dem Dammbalken (3) aufweist, **dadurch gekennzeichnet, dass** der eine erste Schenkel (9) der Aufnahme (6) mit seinem dem Dammbalken (3) zugewandten Ende (14) gegenüber dem anderen zweiten Schenkel (10) der Aufnahme (6) bezüglich dessen dem Dammbalken (3) zugewandten Endes (15) vorstehend ausgebildet ist.

2. Stütze (1) nach Anspruch 1, **dadurch gekennzeichnet, dass** das Dichtungselement (7), zwischen dem ersten und dem zweiten Dichtungselementabschnitt (17, 18) angeordnet, einen dritten Dichtungselementabschnitt (20) aufweist, zur Anlage des Dammbalkens (3) am dritten Dichtungselementabschnitt (20).

3. Stütze (1) nach Anspruch 2, **dadurch gekennzeichnet, dass** der dritte Dichtungselementabschnitt (20) einen sich über die Länge des Dichtungselements (7) erstreckenden Hohlraum (21) aufweist, der außerhalb der Aufnahme (6) angeordnet ist.

4. Stütze (1) nach Anspruch 3, **dadurch gekennzeichnet, dass** der dritte Dichtungselementabschnitt (20) eine Verlängerung des ersten Dichtungselementabschnitts (17) in Tiefenerstreckung (13) der Aufnahme (6) bildet.

5. Stütze (1) nach Anspruch 3 oder 4, **dadurch gekennzeichnet, dass**, bei unbelastetem Dichtungselement (7) der Hohlraum (21) in Richtung der Dammbalken (3) über den ersten Schenkel (9) vorstehend angeordnet ist, insbesondere das der Stufe (16) zugewandte Ende des Hohlraums (21) mit dem Ende (14) des ersten Schenkels (9) abschließt.

6. Stütze (1) nach einem der Ansprüche 3 bis 5, **dadurch gekennzeichnet, dass**, bei unbelastetem Dichtungselement (7), der Hohlraum (21) einen Querschnitt aufweist, der einen rechteckigen Querschnittsabschnitt (22) und/oder mindestens einen gewölbten, insbesondere halbkreisförmigen Querschnittsabschnitt (23) aufweist.

7. Stütze (1) nach einem der Ansprüche 1 bis 6, **dadurch gekennzeichnet, dass** die Stufe (16) und/oder die Dichtlippe (19) auf der Wasserseite (24) der Wasserschutzwand (2) angeordnet sind.

8. Stütze (1) nach einem der Ansprüche 1 bis 7, **dadurch gekennzeichnet, dass** der erste Dichtungselementabschnitt (17) auf zwei abgewandten Seiten mehrere parallel zueinander angeordnete Vorsprünge aufweist, die parallel zu dem Nutgrund (26) einer durch die Aufnahme (6) gebildeten Nut angeordnet sind, insbesondere die Vorsprünge sich über die gesamte Länge des Dichtungselements (7) erstrecken.

9. Stütze (1) nach einem der Ansprüche 1 bis 8, **dadurch gekennzeichnet, dass** die beiden Schenkel (9, 10) der Aufnahme (6) jeweils mindestens einen Vorsprung (28) aufweisen, wobei die Vorsprünge (28) in Vertiefungen (29) des Dichtungselements (7) eingreifen, insbesondere sich die Vorsprünge (28) über die gesamte Länge der Ausnehmungen (6) erstrecken und die Vertiefungen (29) sich über die gesamte Länge des Dichtungselements (7) erstrecken.

10. Stütze (1) nach einem der Ansprüche 1 bis 9, **dadurch gekennzeichnet, dass** sich die Dichtlippe (19) zu deren freien Ende (30) konisch verjüngt.

11. Stütze (1) nach einem der Ansprüche 1 bis 10, **dadurch gekennzeichnet, dass** das Dichtungselement (7) über dessen Länge einen konstanten Querschnitt aufweist, insbesondere als stranggepresstes Dichtungselement (7) ausgebildet ist.

12. Stütze (1) nach einem der Ansprüche 1 bis 11, **dadurch gekennzeichnet, dass** das Dichtungselement (7) aus einem elastischen Kunststoff, insbesondere aus Silikon besteht.

13. Stütze (1) nach einem der Ansprüche 1 bis 12, **dadurch gekennzeichnet, dass** das Dichtungselement (7) mittels des Dammbalkens (3) begrenzt zusammenpressbar ist, wobei die Begrenzung durch Anlage des Dammbalkens (7) am langen Ende (15) des Schenkels (9) der Aufnahme (6) erfolgt.

14. Stütze (1) nach einem der Ansprüche 1 bis 13, **dadurch gekennzeichnet, dass** die Stütze (1) als stranggepresstes Bauteil, insbesondere als aus Aluminium oder einer Aluminiumlegierung bestehendes Bauteil ausgebildet ist.

## Claims

1. Support (1) of a water protection wall (2) having a sealing element (7), wherein the support (1) serves for receiving a plurality of dam beams (3), which are stacked over one another, at their end sides in a U-shaped profiled portion (4) of the support (1), and the support (1) has a receptacle (6) for the elastic sealing element (7) in the region of a leg (5) of the profiled portion (4), for the purpose of sealing the support (1) and dam beams (3) on a dry side (8) of the water protection wall (2), wherein the receptacle (6) has a U-shaped cross section with a first leg (9), another second leg (10) and a web (11) connecting said legs, and the two legs (9, 10) and the sealing element (7) have form-fitting regions (12) by means of which the sealing element (7) is fixed with respect to the receptacle (6) in the depth extent (13) thereof, wherein the sealing element (7) is provided with a step (16) for supporting the sealing element (7) on the second leg (10), and the sealing element (7) has a first sealing element portion (17) which is received by the receptacle (6), and has a second sealing element portion (18) which is arranged outside of the receptacle (6) and is connected to the first sealing element portion (17), wherein the second sealing element portion (18) has a sealing lip (19) for bearing against the dam beam (3), **characterized in that** the one first leg (9) of the receptacle (6) has its end (14) facing the dam beam (3) designed to project in relation to the other second leg (10) of the receptacle (6) with respect to its end (15) facing the dam beam (3).

2. Support (1) according to Claim 1, **characterized in that** the sealing element (7) has, arranged between the first and second sealing element portions (17, 18), a third sealing element portion (20) for the bearing of the dam beam (3) against the third sealing element portion (20).

3. Support (1) according to Claim 2, **characterized in that** the third sealing element portion (20) has a cavity (21) which extends over the length of the sealing element (7) and which is arranged outside of the receptacle (6).

4. Support (1) according to Claim 3, **characterized in that** the third sealing element portion (20) forms an extension of the first sealing element portion (17) in the depth extent (13) of the receptacle (6) .

5. Support (1) according to Claim 3 or 4, **characterized in that**, with the sealing element (7) unloaded, the cavity (21) is arranged to project beyond the first leg (9) in the direction of the dam beam (3), and in particular the end of the cavity (21) that faces the step (16) terminates with the end (14) of the first leg (9).

6. Support (1) according to one of Claims 3 to 5, **characterized in that**, with the sealing element (7) unloaded, the cavity (21) has a cross section which has a rectangular cross-sectional portion (22) and/or at least one curved, in particular semicircular, cross-sectional portion (23).

7. Support (1) according to one of Claims 1 to 6, **characterized in that** the step (16) and/or the sealing lip (19) are/is arranged on the water side (24) of the water protection wall (2).

8. Support (1) according to one of Claims 1 to 7, **characterized in that** the first sealing element portion (17) has, on two opposed sides, a plurality of projections which are arranged parallel to one another and which are arranged parallel to the groove bottom (26) of a groove formed by the receptacle (6), and in particular the projections extend over the entire length of the sealing element (7).

9. Support (1) according to one of Claims 1 to 8, **characterized in that** the two legs (9, 10) of the receptacle (6) each have at least one projection (28), wherein the projections (28) engage in depressions (29) of the sealing element (7), and in particular the projections (28) extend over the entire length of the recesses (6) and the depressions (29) extend over the entire length of the sealing element (7).

10. Support (1) according to one of Claims 1 to 9, **characterized in that** the sealing lip (19) tapers conically towards its free end (30).

11. Support (1) according to one of Claims 1 to 10, **characterized in that** the sealing element (7) has a constant cross section over its length, and in particular is designed as an extruded sealing element (11).

12. Support (1) according to one of Claims 1 to 11, **characterized in that** the sealing element (7) consists of an elastic plastic, in particular of silicone.

13. Support (1) according to one of Claims 1 to 12, **characterized in that** the sealing element (7) can be compressed to a limited degree by means of the dam beam (3), wherein the limit is obtained by the bearing of the dam beam (7) against the long end (15) of the leg (9) of the receptacle (6).

14. Support (1) according to one of Claims 1 to 13, **characterized in that** the support (1) is designed as an extruded component, in particular as a component consisting of aluminium or an aluminium alloy.

## Revendications

1. Support (1) d'une paroi de protection contre l'eau (2) avec un élément de joint d'étanchéité (7), le support (1) servant à recevoir plusieurs batardeaux (3) empilés les uns au-dessus des autres du côté de l'extrémité dans une portion profilée en forme de U (4) du support (1), et le support (1) présentant, dans la région d'une branche (5) de la portion profilée (4), un logement (6) pour l'élément de joint d'étanchéité élastique (7), afin d'étanchéifier le support (1) et les batardeaux (3) sur un côté sec (8) de la paroi de protection contre l'eau (2), le logement (6) présentant une section transversale en forme de U avec une première branche (9), une autre deuxième branche (10) et une âme (11) reliant celles-ci, et les deux branches (9, 10) et l'élément de joint d'étanchéité (7) présentant des régions d'engagement par correspondance de formes (12) au moyen desquelles l'élément de joint d'étanchéité (7) est fixé dans l'étendue en profondeur (13) du logement (6) à ce dernier, l'élément de joint d'étanchéité (7) étant pourvu d'un étage (16) pour supporter l'élément de joint d'étanchéité (7) sur la deuxième branche (10), et l'élément de joint d'étanchéité (7) présentant une première portion d'élément de joint d'étanchéité (17) qui est reçue par le logement (6), ainsi qu'une deuxième portion d'élément de joint d'étanchéité (18) qui est disposée à l'extérieur du logement (6) et qui est connectée à la première portion d'élément de joint d'étanchéité (17), la deuxième portion d'élément de joint d'étanchéité (18) présentant une lèvre d'étanchéité (19) destinée à s'appliquer contre le batardeau (3), **caractérisé en ce que** la première branche (9) du logement (6) est réalisée avec son extrémité (14) tournée vers le batardeau (3) de manière à faire saillie par rapport à l'autre deuxième branche (10) du logement (6) par rapport à son extrémité (15) tournée vers le batardeau (3).

2. Support (1) selon la revendication 1, **caractérisé en ce que** l'élément de joint d'étanchéité (7), disposé entre la première et la deuxième portion d'élément de joint d'étanchéité (17, 18), présente une troisième portion d'élément de joint d'étanchéité (20), pour l'application du batardeau (3) contre la troisième portion d'élément de joint d'étanchéité (20).

3. Support (1) selon la revendication 2, **caractérisé en ce que** la troisième portion d'élément de joint d'étanchéité (20) présente une cavité (21) s'étendant sur la longueur de l'élément de joint d'étanchéité (7), laquelle est disposée à l'extérieur du logement (6).

4. Support (1) selon la revendication 3, **caractérisé en ce que** la troisième portion d'élément de joint d'étanchéité (20) forme un prolongement de la première portion d'élément de joint d'étanchéité (17) dans l'étendue en profondeur (13) du logement (6) .

5. Support (1) selon la revendication 3 ou 4, **caractérisé en ce que**, lorsque l'élément de joint d'étanchéité (7) n'est pas sollicité, la cavité (21) est disposée en saillie dans la direction du batardeau (3) par le biais de la première branche (9), en particulier l'extrémité de la cavité (21) tournée vers l'étage (16) se termine avec l'extrémité (14) de la première branche (9).

6. Support (1) selon l'une quelconque des revendications 3 à 5, **caractérisé en ce que**, lorsque l'élément de joint d'étanchéité (7) n'est pas sollicité, la cavité (21) présente une section transversale qui présente une portion en section transversale rectangulaire (22) et/ou au moins une portion en section transversale courbe (23), en particulier en forme de demi-cercle.

7. Support (1) selon l'une quelconque des revendications 1 à 6, **caractérisé en ce que** l'étage (16) et/ou la lèvre d'étanchéité (19) sont disposés du côté de l'eau (24) de la paroi de protection contre l'eau (2).

8. Support (1) selon l'une quelconque des revendications 1 à 7, **caractérisé en ce que** la première portion d'élément de joint d'étanchéité (17) présente, sur deux côtés opposés, plusieurs saillies disposées parallèlement les unes aux autres, qui sont disposées parallèlement au fond de rainure (26) d'une rainure formée par le logement (6), en particulier les saillies s'étendent sur toute la longueur de l'élément de joint d'étanchéité (7).

9. Support (1) selon l'une quelconque des revendications 1 à 8, **caractérisé en ce que** les deux branches (9, 10) du logement (6) présentent chacune au moins une saillie (28), les saillies (28) s'engageant dans des renfoncements (29) de l'élément de joint d'étanchéité (7), en particulier les saillies (28) s'étendant sur toute la longueur des logements (6) et les renfoncements (29) s'étendant sur toute la longueur de l'élément de joint d'étanchéité (7).

10. Support (1) selon l'une quelconque des revendications 1 à 9, **caractérisé en ce que** la lèvre d'étanchéité (19) se rétrécit coniquement en direction de son extrémité libre (30).

11. Support (1) selon l'une quelconque des revendications 1 à 10, **caractérisé en ce que** l'élément de joint d'étanchéité (7) présente une section transversale constante sur sa longueur, en particulier est réalisé sous forme d'élément de joint d'étanchéité extrudé (7).

12. Support (1) selon l'une quelconque des revendications 1 à 11, **caractérisé en ce que** l'élément de joint d'étanchéité (7) se compose d'un plastique élastique, en particulier de silicone.

13. Support (1) selon l'une quelconque des revendications 1 à 12, **caractérisé en ce que** l'élément de joint d'étanchéité (7) peut être comprimé de manière limitée au moyen du batardeau (3), la limitation s'effectuant par l'application du batardeau (7) au niveau de l'extrémité longue (15) de la branche (9) du logement (6).

14. Support (1) selon l'une quelconque des revendications 1 à 13, **caractérisé en ce que** le support (1) est réalisé sous forme de composé extrudé, en particulier sous forme de composé constitué d'aluminium ou d'un alliage d'aluminium.
